# EUROPEAN PATENT APPLICATION

(11) **EP 4 328 873 A1**
(43) Date of publication of application: **28.02.2024**
(21) Application number: 22191937.6
(22) Date of filing: 24.08.2022
(51) Int. Cl.: G06V 20/70

(54) **METHOD AND APPARATUS FOR LABELLING SENSOR DATA**

(71) Applicant: Helsing GmbH, 81671 Munich (DE)
(72) Inventor: FISCHBACH, Christian, 14532 Kleinmachnow (DE); PERUSINI, Tommaso, 81671 München (DE); FINK, Robert, 81671 München (DE)
(74) Representative: Rummler, Felix

(57) **Abstract**

Methods and apparatus for generation and image rendering of object labels from sensor data are described, whereby one or more objects, in particular military objects, are detected, classified and tracked based on the sensor data, a label for the classified one or more objects is automatically determined based on a predetermined label dataset, wherein the predetermined label dataset assigns at least one predetermined class of hierarchical object or group of objects to a respective predetermined label, and the label or an indication of the label associated with the sensor data is output and/or stored. Other embodiments are also described and claimed.

## Description

### Field of the Invention

The present invention relates generally to object tracking systems, and more particularly to techniques for improved generation and image rendering of object labels from sensor data.

### Background

Battle command and control systems are generally known, in which military objects and formations thereof can be automatically detected, classified and tracked using sensor data received from one or more sensor means. Based on the detected military formations, strategic military decisions may be made. Said decision-making often involves a plurality of systems or parties, such as responsible persons or authorities. It is thus crucial that a communicated interpretation of the detected sensor data is correctly understood by all of the systems and parties involved.

In complex military situations, said sensor data may be extensive. Moreover, said sensor data may need to be evaluated in real time in order to be able to appropriately react to the detected military situation.

Known method and systems or devices for identifying and communication objects within sensor data, in particular military objects and formations thereof, are time-consuming, ambiguous and/or prone to error. However, in particular when making military decisions within a war zone, identifying and communication said objects in a fast, reliable, secure and effective way is of high importance.

What is desired are methods and apparatus to address the above mentioned deficiencies.

### Summary of the Invention

Aspects of the present invention are set out in the accompanying claims.

According to one aspect, there is described a method comprising receiving sensor data; detecting and classifying one or more hierarchical objects, in particular military objects, based on the sensor data; automatically determining a label for the classified one or more hierarchical objects based on a predetermined label dataset, wherein the predetermined label dataset assigns at least one predetermined class of object or group of objects to a respective predetermined label; and outputting and/or storing the label or an indication of the label associated with the sensor data.

In another aspect, there is described a method comprising receiving sensor data; processing the sensor data to identify a plurality of hierarchical objects located within at least a portion of map data; determining a display label of each identified hierarchical object based on a structured set of symbols; determining one or more clusters of identified hierarchical objects; determining a display label of the or each object cluster based on the structured set of symbols; providing a display space for displaying at least a portion of map data and the determined display label or labels, wherein the display space is displayable at one of a plurality of levels of zoom with display labels for identified hierarchical objects output at a first level of zoom and display labels of object clusters output at a second level of zoom; and receiving a user input zoom command to modify the displayed portion of the map, wherein the output of display labels of hierarchical objects within the displayed portion of the map is modified in response to the user input zoom command.

In other aspects, there are described apparatus and systems configured to perform the methods as described above. In a further aspect, a computer program is described, comprising machine readable instructions arranged to cause a programmable device to carry out the described methods.

### Brief Description of the Drawings

There now follows, by way of example only, a detailed description of embodiments of the present invention, with references to the figures identified below.
Figure 1 is a block diagram showing the main components of a battle control system according to an embodiment of the invention.
Figures 2 and 3 show examples of standard icon-based symbols and modifiers.
Figure 4 schematically illustrates an example of the standard symbols of Figures 2 and 3 in use.
Figure 5 is a block diagram schematically illustrating an exemplary hierarchical object data record.
Figure 6 is a flow diagram illustrating the main processing steps performed by the object tracker and label aggregator engines shown in Figure 1 according to an embodiment.
Figure 7, which comprises Figures 7A to 7D, schematically illustrates an example of automatic determination of hierarchical objects from tracked object data.
Figure 8 is a flow diagram illustrating processing steps performed by the label renderer engine shown in Figure 1.
Figure 9 is a diagram of an example of a computer system on which one or more of the functions of the embodiments may be implemented.

### Description of Embodiments

An object tracking system, such as a battle control and control system, receives sensor data from one or more sensor data sources, detects, classifies and tracks one or more objects, in particular military objects, based on the sensor data, and automatically determines a label for the classified one or more hierarchical objects based on a predetermined label dataset. The predetermined label dataset assigns at least one predetermined class of object or group of objects to a respective predetermined label. The system outputs and/or stores the label or an indication of the label associated with the sensor data.

Thee output labels may be based on objective indicators. For military objects, there are various standards on design and generation of tactical symbols, for example as published by NATO, UK's Ministry of Defence, Germany's Federal Ministry of Defence, etc. In addition, the symbol database may be adapted to include additional custom rules. The system can contain different rule sets, each encoding a particular type of aggregation rules. The rules may include objective indications as to when a certain number of hierarchical objects is considered to represent a certain hierarchy level, for example, as to when a squad is considered a squad. The indications may comprise constraints or thresholds regarding the number of objects, type of objects, distance between the objects, etc. that are used in cluster or constellation analysis to automatically aggregate tactical symbols of identified objects based on a specified hierarchy table. The system may determine whether a maximum distance between the classified hierarchical objects of the plurality of objects meets a predetermined threshold. The maximum distance may be indicated in the label dataset. Thereby, it is ensured that independent hierarchical objects are correctly identified as such, rather than as part of a group of further objects detected in the same or additional sensor data.

An aggregation may then be displayed. Optionally, reference can be made to the corresponding set of rules. Within one common operating picture, several users may thereby be able to control and view tracked hierarchical objects within their own operating display based on zoom level or user rights. A respective label may be determined for each of the classified one or more hierarchical objects. Additionally, or alternatively, a label may be determined for a group of a plurality of classified hierarchical objects. The classification of the detected one or more hierarchical objects may be performed by a machine learning, ML, model. The ML model may classify a detected hierarchical object as a particular object and/or as being part of a particular group of objects. Based on the classification and the corresponding predetermined class of object or group of objects indicated in the label dataset and the corresponding predetermined label assigned thereto, the label of the detected hierarchical object is determined.

Thereby, a fast, reliable, and effective way of labelling the sensor data is obtained, which enables an accordingly fast and reliable decision-making. In particular, different cooperating parties may agree on the same label dataset, which facilitates and ensures a reliable communication of interpretations of sensor data, thereby improving the exchange of information included in the sensor data.

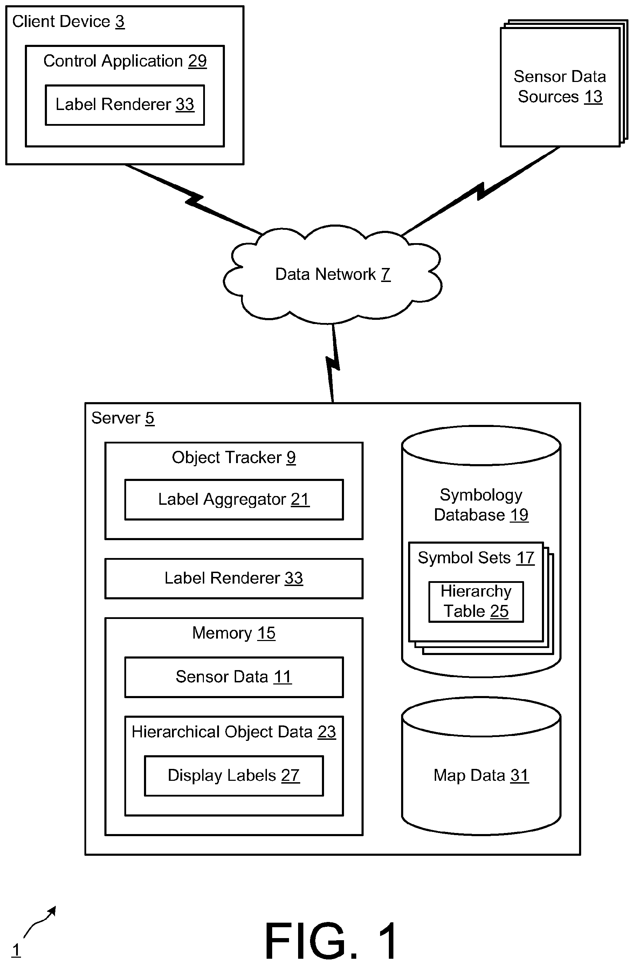

Referring to Figure 1, an exemplary object tracking system 1 comprises one or more client devices 3 in communication with a server 5 via a data network 7. In the present embodiment, the server 5 includes an object tracker engine 9 that implements routines to identify, classify and track hierarchical objects and object groups based on sensor data 11, such as image, electro-optical, infrared, radar, synthetic aperture radar, acoustic, seismic, signal-intelligence data, or the like, from one or more sensor data sources 13 that may be deployed on vehicles (manned/ unmanned), drones, airplanes, vessels, satellites, or the like. The sensor data 11 may be received from the one or more sensor data sources 13 over the data network 7, and stored in a memory 15 of the server 5. The plurality of sensor datasets may be included in consecutively received datasets of a data stream. Additionally, or alternatively, the plurality of sensor datasets may be received by a plurality of sensors. Hence, labels may be determined for a plurality of hierarchical objects, in particular a group of objects that are detected based on a plurality of sensor datasets, wherein the plurality of sensor datasets may be obtained at the same time from different sensors and/or consecutively from one or more sensors.

The server 5 also includes a label aggregator engine 21 that implements dynamic aggregation of tracked hierarchical objects and associated labels into corresponding superordinate group objects in respective structured hierarchies, based on a selected symbol set 17. The label aggregator 21 may be implemented as a component of the object tracker 9. Tracked object information and hierarchical object-related data may be stored as hierarchical object data 23 in the memory 15. Each tracked hierarchical object and object group is associated with a corresponding label defined by a symbol set 17, stored for example in a symbology database 19 of the server 5. A plurality of symbol sets 17 may be stored in a symbology database 19 of the server 5. Each symbol set 17 may encode a particular set of aggregation rules, for example as a hierarchy table 25, that define compositions of constituent labels at one or more hierarchy levels that together form an object group at a subsequent hierarchy level.

Table 1 is an example overview of some of the terms commonly used to describe army hierarchy in armed forces across the world and the relative comparative unit/formation designations and constituent compositions between the separate hierarchical levels of command.

**Table 1**

| Echelon / Hierarchy Level | Strength | Constituent Units |
|---|---|---|
| Team | 2-4 | n/a |
| Squad | 8-12 | 2-3 teams |
| Section | 8-25 | 1-2+ squads or 3-6 teams |
| Platoon | 26-55 | 2+ squads (and/or sections) |
| Company | 80-250 | 2-8 platoons |
| Battalion | 300-1,000 | 2-6 companies |
| Regiment | 1,000-3,000 | 2+ battalions |
| Brigade | 3,000-5,000 | 2+ regiments or 3-8 battalions |
| Division | 6,000- 25,000 | 2-4 brigades or regiments |
| Corps | 20,000-50,000 | 2+ divisions |
| Army | 100,000-200,000 | 2-4 corps |
| Army Group | 400,000-1,000,000 | 2+ armies |
| Theatre | 1,000,000-10,000,000 | 4+ army groups |

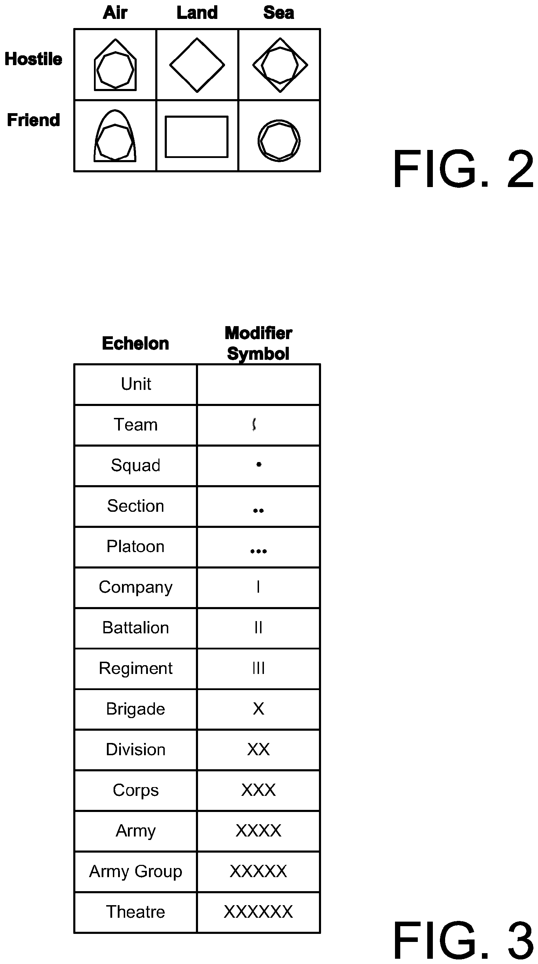

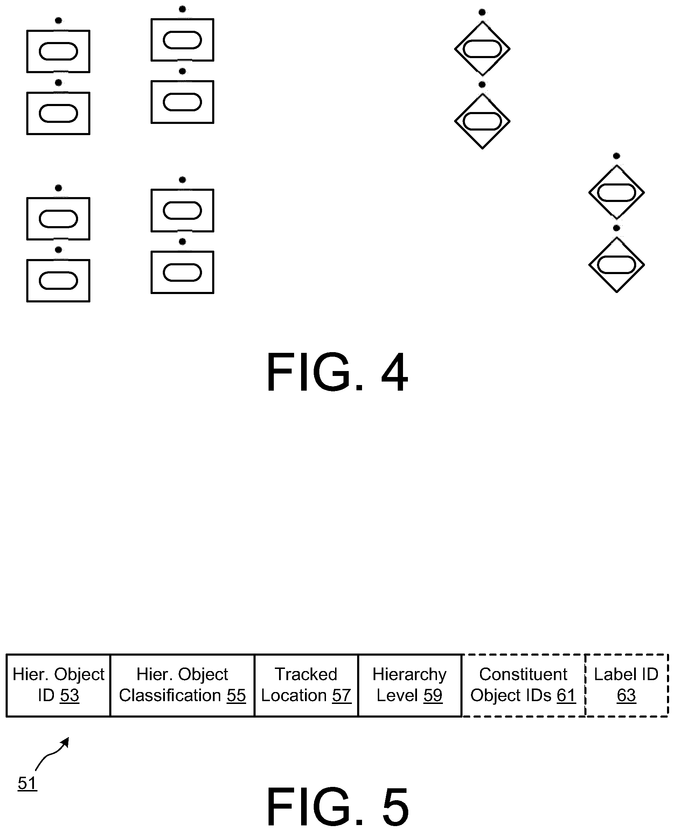

Each symbol set 17 may also define a respective standardised structured set of graphical symbols, for example to display operational information in military systems and applications. The label aggregator 21 may generate display labels 27 of the tracked hierarchical objects based on the parameters and/or procedures of a selected symbol set 17. Figure 2 shows an example of standard icon-based symbols based on the NATO Standard on Joint Military Symbology APP-6(C), to represent basic land, air and sea unit types, across friendly and hostile identity categories. Figure 3 shows example icon-symbol amplifiers (modifiers) also from the NATO standard that can be combined with the basic unit icons to represent comparative unit/formation designations for each separate echelon level of command. Figure 4 schematically illustrates an example of the NATO standard symbols in use. The system 1 may generate, plot and display respective symbols representing the relative locations of detected hierarchical objects, for example over a corresponding portion of map data (not shown for clarity). In the illustrated example, the display includes symbols (and associated symbol modifiers) indicative of eight friendly land-based armoured tank squads on the left hand side, and four hostile land-based armoured tank squads on the right hand side, as identified, classified and aggregated based on captured sensor data.

Figure 5 schematically illustrates an exemplary record 51 of hierarchical object data 23. The object data record 51 may include a hierarchical object identifier 53, hierarchical object classification data 55, and a tracked location 57, used by the object tracker 9 to store and update the last known location of each detected and identified object to be tracked. The object data record 51 may also include corresponding hierarchy level data 59 identifying the determined hierarchy level of the object, used by the label aggregator 21 to determine aggregate object groups at the next hierarchy level as well as to generate corresponding display labels 27 based on the associated echelon. The hierarchical object data record 51 may also include corresponding constituent label identifiers 61, shown in dashed outline in Figure 5, linked to a plurality of hierarchical object data records 51 to locate constituent units of a hierarchical group object. The location data 57 may be used by the label aggregator 21 to store and update a tracked location of a hierarchical group object, based on the respective tracked locations 57 of the constituent hierarchical objects. The hierarchical object data record 51 may also include a label identifier 63 used to locate a corresponding display label 27 of the tracked hierarchical object, also shown in dashed outline in Figure 5.

In one exemplary implementation, the server 5 is configured to automatically determine a plurality of first labels for a plurality of classified hierarchical objects, and to automatically determine a second label for the plurality of classified hierarchical objects based on the determined plurality of first labels and the predetermined label dataset. In other words, the first labels are accumulated and then based on the accumulated first labels, a second label is determined. A first label may be determined for one or more first classified hierarchical object, a first group of classified hierarchical objects and/or a classified first group of hierarchical objects. The second label may be determined for a second group of hierarchical objects comprising the first hierarchical objects or first group of hierarchical objects. Put differently, the second group represents a superordinate group of the first, subordinate group. For example, in a military scenario, groups of military objects may be defined hierarchically. More particularly, four soldiers may be one team, two teams may be a squad, two squads may be a section, two sections may be a platoon, five platoons may be a company, four companies may be a battalion, etc. The one or more detected objects may be part of a specific hierarchy level, e.g. a team of soldiers or a platoon of teams, etc. Each of the units detected within the sensor data may be labelled according to the label dataset, for example based on one or more predetermined classes of soldiers and one or more predetermined labels associated thereto. Moreover, the label dataset may assign a respective label for each higher level of hierarchy, e.g. a respective label for a team, a squad, a section, a platoon, a company, a battalion, etc.

By accumulating the first labels, the efficiency of the method is further increased. Beyond that, different labels may be output, for example based on view settings, user preferences or profiles and/or based on a part of sensor data selected by a user, thereby rendering the labelling of the sensor data more display device-specific, user-friendly and flexible. Alternatively or additionally, a maximum label density may be defined for each aggregate level, to control the aggregation of labels by the label aggregator 21. User profile data may define a maximum aggregate level for each user, whereby a control application 29 may present a user with selectable aggregate levels up to the defined maximum for that user.

As will be described in greater detail below, components of the object tracking system 1 of Figure 1 are configured to provide hierarchical object data 23 to one or more control application 29, such as a battle command and control application, at a client device 3. The control application 29 may allow the user to view different geographical portions of the map data stored for example in a map database 31, and to manipulate the view settings of the displayed map data, for example to zoom in or zoom out on a particular geographical location, etc. Each control application 29 implements routines to communicate with the server 5 and to obtain hierarchical object data 23 generated for example by the label aggregator 21. The control application 29 may render an output image for display to a user of the client device 3 based on the received hierarchical object data 23, for example as an annotated digital map component of an interactive user interface.

The control application 29 may be configured with a label renderer engine 33 to determine and output a selected subset of the display labels 27, based on the hierarchical object data 23 received from the server 5 and one or more aggregation level parameters. The label renderer engine 33 determines a dynamic aggregation level based on the one or more aggregation level parameters, such as zoom level from the current view settings, selected symbol set, and/or user profile parameters and settings. Alternatively or additionally, the server 5 may be configured with a label renderer engine 33 to determine and render the selected subset of display labels 27 over a digital map image, for example based on raster and/or vector image map data 31, which may be transmitted to the client device 3 for display by the control application 29.

In an exemplary implementation, the system 1 may be configured to output, for example to a display of the client device 3, at least a part of the received sensor data, and to determine one or more output hierarchical objects of the classified one or more hierarchical objects based on the output sensor data. The output label may be automatically determined for the output one or more hierarchical objects together with the output sensor data. In this way, the system may determine whether one or more hierarchical objects of the classified one or more hierarchical objects are detected based on the output sensor data and only the labels of those hierarchical objects are output together with the output sensor data. In that manner, information representing an interpretation of the sensor data is displayed in a comprehensive manner.

Additionally or alternatively, the system 1 may be configured to determine a plurality of output hierarchical objects of the classified hierarchical objects based on the output of at least part of the received sensor data, wherein the plurality of classified hierarchical objects are assigned to a, or the plurality of first labels. The system may output a, or the second label for the plurality of classified hierarchical objects together with the output sensor data, if the plurality of classified hierarchical objects is detected based on the output at least part of the received sensor data. Preferably, the system 1 may be configured to prevent the plurality of first labels from being output and/or displayed. Thereby, information representing an interpretation of the sensor data is displayed in a clear and quick to grasp manner.

The system 1 may determine the label to be output and/or stored based on a predetermined user profile and/or the predetermined label dataset. For example, a specific user may prefer the output, in particular display, of labels of specific hierarchical objects or group of objects. Alternatively, or additionally, the specific user may be subject to specific access restrictions that allow only the output of certain labels and/or sensor data. Thereby, a more user friendly and/or more secure method is provided.

The system 1 may be configured to receive a first user input, for example via a client device 3, and to determine the predetermined label dataset (e.g. symbol set 17) based on the first user input, in particular wherein the predetermined label dataset is determined based on a plurality of stored predetermined label datasets. In other words, the label may be determined based on a selected one of different label datasets. Hence, different users may configure their own label dataset or different label datasets for different scenarios and/or collaborations. Thereby, flexibility and user-friendliness is further increased.

The system 1 may further be configured to receive a second user input, determine at least a part of the received sensor data to be output based on the second user input, and determine one or more output hierarchical objects of the classified one or more hierarchical objects based on the determined output sensor data. The output label may be automatically determined for the output one or more hierarchical objects together with the output sensor data. In this way, a user may select, in particular change, the sensor data to be output, e.g. may zoom in or zoom out within the sensor data, and may at the same time be presented with the labels of the classified hierarchical objects that are detected based on the selected sensor data.

The client devices 3 may be, for example, computers such as a desktop computer, a laptop, a computing terminal, a smart phone, a tablet computer, or the like, or components of digital map imaging systems such as a digital map and navigation system, etc. The server 5 may include a plurality of servers located at a central site or across various distributed sites. The data network 7 may be any suitable data communication network or combination of networks, including hardwired based networks such as cable and telephone networks, and/or wireless based networks such as wireless local- or wide-area networks, satellite, and cellular phone communication networks, etc.

It should be appreciated that the object tracker 9 and label renderer 33 engines may be combined into a single computing module or divided into additional modules, and may also be configured to utilise other components common to a computing device, such as network interfaces and RAM, not illustrated for clarity. The object tracking system 1 may also include other components, sub-components, engines, modules, and devices commonly found in a battle command and control system, which are also not illustrated for clarity.

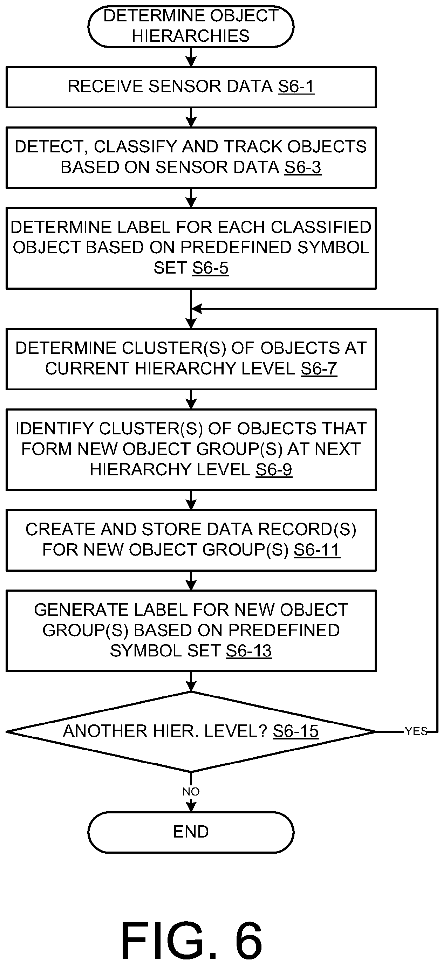

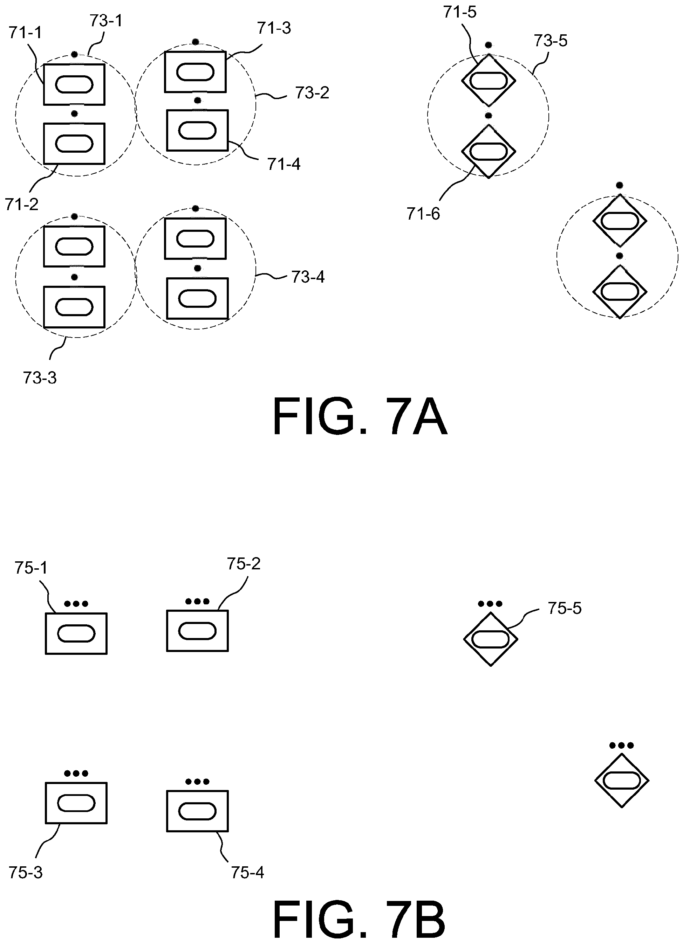

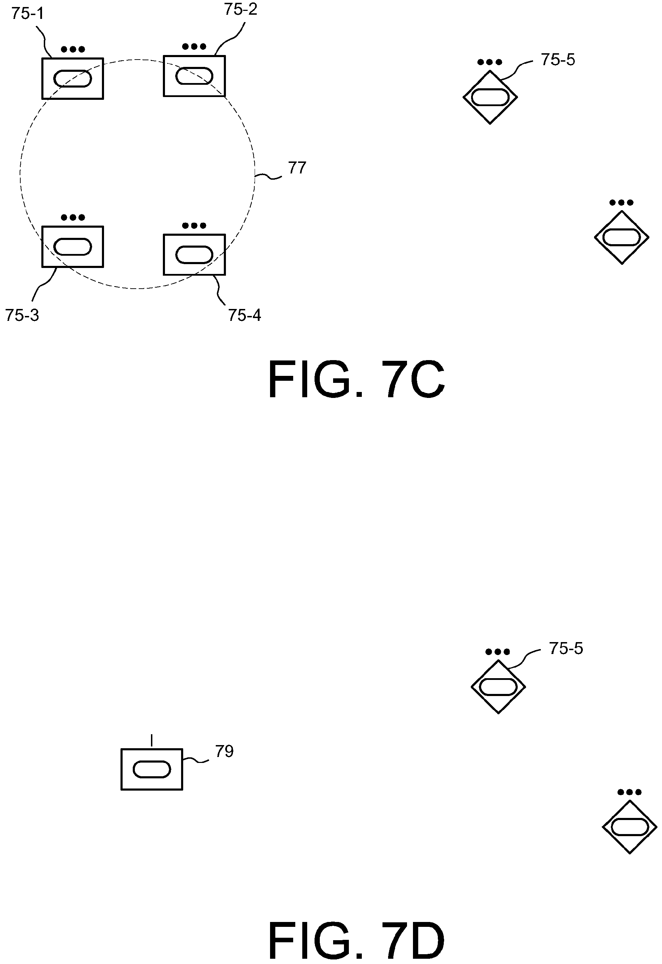

Figure 6 is a flow diagram illustrating an exemplary embodiment of a method to automatically determine object hierarchies and associated labels of detected hierarchical objects based on sensor data, for example by the server 5 in response to a request from a control application 29 of a client device 3. Reference is also made to Figure 7, which comprises Figures 7A to 7D, schematically illustrating an example of automatic object clustering and hierarchy determination by the label aggregator 21, of the land-based armoured tank hierarchical objects as shown in Figure 4, based on the hierarchy table 25.

As shown, the process may begin at step S6-1 where the object tracker 9 of the server 5 receives sensor data 11 from one or more sensor data sources 13, such as a camera, satellite, radar, sonar, or the like, that capture data representing detectable characteristics of a specified location, such as an area of the map data 31. In the present exemplary embodiment, the sensor data 11 includes image data covering at least a map area currently displayed by the control application 29 of the client device 3. At step S6-3, the object tracker 9 processes the received sensor data 11, using any known technique, to detect the location and characteristics of one or more objects present in the captured area, and to subsequently classify the detected object based on the characteristics. For example, one or more trained machine-learning models and/or object detection algorithms may be used to process the received sensor data 11 and output data identifying the geographical location and classification (e.g. unit type and hostile/friend identity as shown in Figure 2) of each detected object to be tracked.

At step S6-5, the object tracker 9 determines a display label 27 for each detected object from a predefined or selected symbol set 17 of the symbology database 19. For example, a display label 27 may be generated based on the identified classification and/or type of each detected object, in accordance with the rules and protocols of composition defined by the selected symbol set 17. The object tracker 9 may be configured to track and label individual units that are detected within and surrounding the current map area, and to store the set of display labels 27 in the memory 15. As those skilled in the art will appreciate, a machine-learning model and/or object detection algorithm may be further configured and trained to output a corresponding display label 27 of each detected object. The object tracker 9 may also be configured to detect and label groups of objects based on the received sensor data 11.

The label aggregator 21 is then used to process the tracked object data 23 to identify and label superordinate groups of hierarchical objects in the current map area, based on subordinate hierarchical object data records 51 and the hierarchy table 25 of the selected symbol set 17 (for example as shown in Table 1). In this exemplary embodiment, the label aggregator 21 is configured to automatically determine all possible aggregations of the tracked hierarchical objects into respective new group objects at a superordinate hierarchy level. As those skilled in the art will appreciate, in an alternative implementation, the label aggregator 21 may instead perform aggregation of the set of hierarchical object data records 51 in real-time, based on the subset of identified hierarchical objects within the current view.

Accordingly, at step S6-7, the label aggregator 21 performs processing of the object data records 23 at the current hierarchy level, this being the lowest hierarchy level the first time the process is performed, to determine one or more clusters of tracked objects and associated labels. The label aggregator 21 may implement any known algorithm to perform object clustering based on relative proximity of the associated geographical locations of the objects at the current hierarchy level. At step S6-9, the label aggregator 21 determines if any of the clusters of tracked classified objects from the step S6-7 define a respective new group object at the next hierarchy level. For example, the label aggregator 21 may check whether the number and type of tracked subordinate objects and associated labels within the corresponding defined cluster distance meet the predefined number and type of constituent units of a superordinate level in the hierarchy table 29 of the selected symbol set 17.

Figure 7A schematically illustrates an example of determined clusters 73 of proximally adjacent squad group objects 71 as shown in Figure 4. Based on the example hierarchy table 29 set out in Table 1, a group of two or more squads is determined to form a platoon. The hierarchy table 29 may also include a predefined maximum cluster distance value for each hierarchy level. For example, the platoon echelon may be associated with a maximum cluster distance value of 500 metres, defining a circular area having diameter of 500 metres or a square area of 500 x 500 metres. in which to identify squad units to be clustered into a platoon. Consequently, the label aggregator 21 identifies that the squad units 71 within each determined cluster 73 are to form a respective new superordinate platoon group object 75, as shown in Figure 7B.

Returning to Figure 6, at step S6-9, the label aggregator 21 creates a new record in the hierarchical object data 23 for each new group of clustered entities identified at step S6-7, including the associated determined hierarchy level 59 of the group object. Optionally, the label aggregator 21 may also store the set of constituent object IDs 61 used to locate the respective data record of each subordinate hierarchical object in the cluster. At step S6-11, the label aggregator 21 determines a display label 27 for the, or each, new group of constituent units identified at step S6-9, based on the predefined symbol set 17. For example, a display label 27 may be generated based on the classification and/or type of each hierarchical object group, in accordance with the rules and protocols of composition defined by the selected symbol set 17. At step S6-13, the label aggregator 21 determines if there is another hierarchy level to process from the set of hierarchical object data records 51 including the new object group(s) from step S6-9. Processing returns to step S6-7 if there is another hierarchy level to process, otherwise the aggregation process is complete.

Figure 7C shows an example of the subsequent clustering of the group 77 of proximally adjacent platoon group objects 75 into a respective land-based tank company group object, as shown in Figure 7D. Figure 7C schematically illustrates an example of a subsequent determined cluster 77 of proximally adjacent platoon group objects 75 as shown in Figure 7B. Based on the example hierarchy table 29 set out in Table 1, a group of two to eight platoons (within a respective predefined cluster distance for that hierarchy level) is determined to form a company. Consequently, the label aggregator 21 identifies that the subordinate platoon units 75 within the determined cluster 77 are to form a respective new superordinate company group object 79, as shown in Figure 7D.

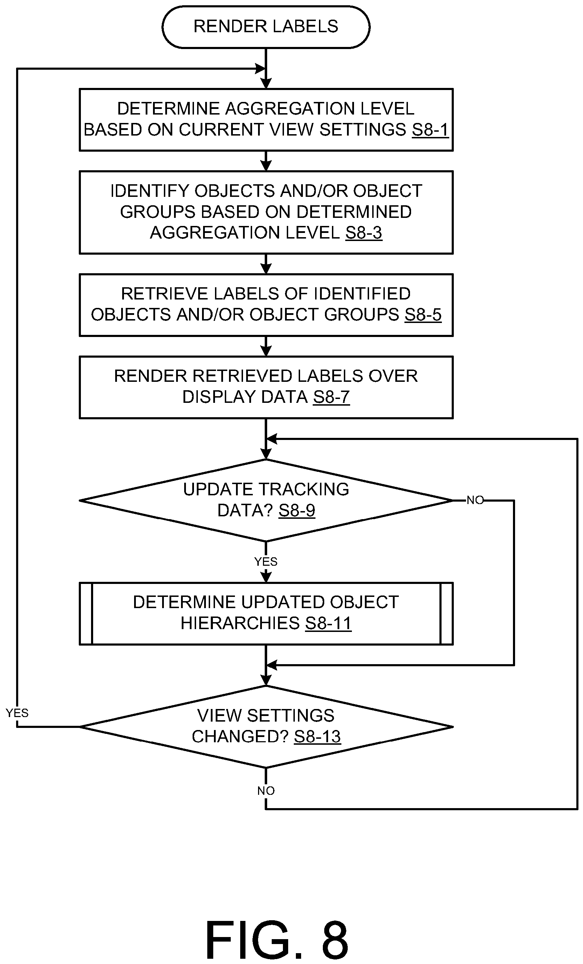

Figure 8 is a flow diagram illustrating an exemplary embodiment of a method to automatically and dynamically determine and render labels of tracked objects based on current view settings, for example by a label renderer 31 on the client device 3 and/or the server 5. At step S8-1, the label renderer 33 may determine a level of aggregation to be applied to the tracked objects within a current view of the map data 31. The aggregation level may be determined based on the selected symbol set 17, a predefined label density threshold such as a maximum distance between rendered display labels of the classified objects, user profile settings such as preferred label density or customised symbol set, view settings such as zoom level, and/or client device parameters such as display screen type, size and/or resolution. For example, an aggregation level may be determined based on the maximum number of hierarchical object labels 57 that are, or that are to be, displayed in the current view and/or zoom level of the particular display device type.

Alternatively or additionally, one or more aggregation levels may be determined for each user based on the user's rank and corresponding predefined user rights. For example, the aggregation levels for a military commander may be determined as the level of aggregation of a commander's rank and one level below, such that the label renderer 33 automatically determines and outputs a subset of tracked hierarchical objects at the hierarchy level(s) defined for the level of aggregation. Referring to the exemplary hierarchy set out in Table 1, a brigadier general rank may be associated with an aggregation level including the brigade and battalion echelons, a battalion commander rank may be associated with an aggregation level including battalion and company echelons, and so on. It will be appreciated that these exemplary aggregate level definitions are merely illustrative and any number of levels may be defined. As a further alternative, the user interface may be configured to provide user selection of an aggregation level from a plurality of determined options up to a predefined level in the user's profile settings.

At step S8-7, the server 5 may render the display labels 27 over a digital map image, for example based on raster and/or vector image map data 31, to be transmitted to the client device 3 for display by the control application 29. Alternatively, the server 5 may transmit the hierarchical object data 23 including the determined display labels 27 to the client device 3, and the control application 29 may render an output image based on the received tracked object data 23, such as an area of the digital map 31 with the display labels 27 of hierarchical objects and/or object groups within the area as determined for the current aggregate level, for display by the client device 3.

At step S8-9, the server 5 may also be configured to determine that an update or change to the object tracking data is to be processed, for example in response to receiving new sensor data 11. If the server 5 determines that an update is to be performed, then at step S8-11, the label aggregator 21 is used to determine updated object hierarchy data as discussed from step S6-1 in Figure 6, based on new sensor data 11. At step S8-13, the server 5 may be configured to respond to subsequent changes to the view settings, for example from the user performing a scroll and/or zoom interaction with the map view of the control application 29, or selection of different display parameters. If the server 5 determines that the view settings have changed, then processing returns to step S8-1 where the label renderer 33 may determine a different aggregate level based on the new view settings.

### Example Computer System Implementation

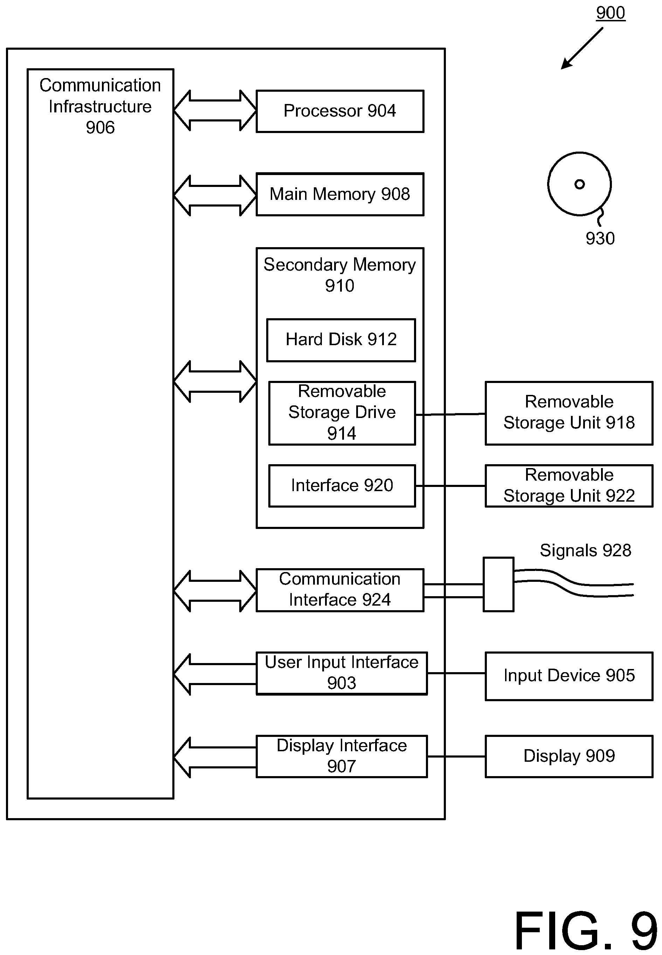

Figure 9 illustrates an example computer system 900 in which the present invention, or portions thereof, can be implemented as computer-readable code to program processing components of the computer system 900. Various embodiments of the invention are described in terms of this example computer system 900. For example, the client devices 3 and server 5 of Figure 1 can each be implemented in system 900. The methods illustrated by the flowcharts of Figures 6 and 8 can also be implemented in system 900. After reading this description, it will become apparent to a person skilled in the relevant art how to implement the invention using other computer systems and/or computer architectures.

Computer system 900 includes one or more processors, such as processor 904. Processor 904 can be a special purpose or a general-purpose processor. Processor 904 is connected to a communication infrastructure 906 (for example, a bus, or network). Computer system 900 also includes a user input interface 903 connected to one or more input device(s) 905 and a display interface 907 connected to one or more display(s) 909, which may be integrated input and display components. Input devices 905 may include, for example, a pointing device such as a mouse or touchpad, a keyboard, a touchscreen such as a resistive or capacitive touchscreen, etc. According to an embodiment, computer display 930, in conjunction with display interface 902, can be used to display an interface of the control application 29 depicted in Figure 1.

Computer system 900 also includes a main memory 908, preferably random access memory (RAM), and may also include a secondary memory 910. Secondary memory 910 may include, for example, a hard disk drive 912, a removable storage drive 914, flash memory, a memory stick, and/or any similar non-volatile storage mechanism. Removable storage drive 914 may comprise a floppy disk drive, a magnetic tape drive, an optical disk drive, a flash memory, or the like. The removable storage drive 914 reads from and/or writes to a removable storage unit 918 in a well-known manner. Removable storage unit 918 may comprise a floppy disk, magnetic tape, optical disk, etc. which is read by and written to by removable storage drive 914. As will be appreciated by persons skilled in the relevant art(s), removable storage unit 918 includes a non-transitory computer usable storage medium having stored therein computer software and/or data.

In alternative implementations, secondary memory 910 may include other similar means for allowing computer programs or other instructions to be loaded into computer system 900. Such means may include, for example, a removable storage unit 922 and an interface 920. Examples of such means may include a program cartridge and cartridge interface (such as that found in video game devices), a removable memory chip (such as an EPROM, or PROM) and associated socket, and other removable storage units 922 and interfaces 920 which allow software and data to be transferred from the removable storage unit 922 to computer system 900.

Computer system 900 may also include a communications interface 924 implemented for example at the operating system level to allow data to be transferred between computer system 900 and external devices, for example as signals 928 over a communication channel 926. Communications interface 924 may include a modem, a network interface (such as an Ethernet card), a communications port, a PCMCIA slot and card, or the like.

Various aspects of the present invention can be implemented by software and/or firmware (also called computer programs, instructions or computer control logic) to program programmable hardware, or hardware including special-purpose hardwired circuits such as application-specific integrated circuits (ASICs), programmable logic devices (PLDs), field-programmable gate arrays (FPGAs), etc. of the computer system 900, or a combination thereof. Computer programs for use in implementing the techniques introduced here may be stored on a machine-readable storage medium and may be executed by one or more general-purpose or special-purpose programmable microprocessors. The terms "computer program medium", "non-transitory computer readable medium" and "computer usable medium" introduced herein can generally refer to media such as removable storage unit 918, removable storage unit 922, and a hard disk installed in hard disk drive 912. Computer program medium, computer readable storage medium, and computer usable medium can also refer to memories, such as main memory 908 and secondary memory 910, which can be memory semiconductors (e.g. DRAMs, etc.). These computer program products are means for providing software to computer system 900.

Computer programs are stored in main memory 908 and/or secondary memory 910. Computer programs may also be received via communications interface 924. Such computer programs, when executed, enable computer system 900 to implement the present invention as described herein. In particular, the computer programs, when executed, enable processor 904 to implement the processes of embodiments of the present invention as described above. Accordingly, such computer programs represent controllers of the computer system 900. Where the invention is implemented using software, the software may be stored in a computer program product and loaded into computer system 900 using removable storage drive 914, interface 920, hard drive 912, or communications interface 924.

### Alternative Embodiments.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as an "engine", a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart and/or block diagrams of methods, apparatus (systems) and computer program products according to embodiments of the disclosure. It will be understood that each block of the flowchart and/or block diagrams, and combinations of blocks in the flowchart and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks of the flowchart diagrams may occur out of the order noted in the figures. For example, two blocks shown in succession may, in fact, be executed substantially concurrently, or the blocks may sometimes be executed in the reverse order, depending upon the functionality involved. It will also be noted that each block of the flowchart diagrams, and combinations of blocks in the flowchart diagrams, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer implemented method comprising:
receiving sensor data;
detecting and classifying a plurality of objects, in particular military objects, based on the sensor data;
automatically determining at least one label for the classified objects based on a predetermined label dataset, wherein the predetermined label dataset assigns at least one predetermined class of object or group of objects to a respective predetermined label;
outputting and/or storing the label or an indication of the label associated with the sensor data.

2. The method according to claim 1, further comprising:
automatically determining a plurality of first labels for a plurality of classified objects; and
automatically determining a second label for the plurality of classified objects based on the determined plurality of first labels and the predetermined label dataset.

3. The method according to claim 2, wherein the first labels are associated with subordinate classified objects of a defined hierarchy, and the second labels are associated with a corresponding superordinate classified object of the defined hierarchy.

4. The method according to claim 2 or 3, further comprising:
determining whether a maximum distance between the classified objects of the plurality of objects meets a predetermined threshold.

5. The method according to any of the preceding claims, wherein the sensor data comprises a plurality of sensor datasets received from a sensor or a plurality of sensors.

6. The method according to any of the preceding claims, further comprising:
outputting, in particular displaying, at least a part of the received sensor data; and
determining one or more output objects of the classified one or more objects based on the output sensor data;
wherein outputting the label comprises outputting the label automatically determined for the output one or more objects together with the output sensor data.

7. The method according to any of the preceding claims, further comprising:
outputting, in particular displaying, at least a part of the received sensor data; and
determining a plurality of output objects of the classified objects based on the output at least part of the received sensor data, wherein the plurality of classified objects are assigned to a, or the plurality of first labels;
wherein outputting the label comprises:
outputting a, or the, second label for the plurality of classified objects together with the output sensor data, if the plurality of classified objects is detected based on the output at least part of the received sensor data; and
preventing the plurality of first labels from being output.

8. The method according to any of the preceding claims, further comprising:
determining the label to be output and/or stored based on one or more defined parameters of a display device.

9. The method according to any of the preceding claims, further comprising:
determining the label to be output and/or stored based on a predetermined user profile and/or the predetermined label dataset.

10. The method according to any of the preceding claims, further comprising:
receiving a first user input; and
determining the predetermined label dataset based on the first user input, in particular wherein the predetermined label dataset is determined based on a plurality of stored predetermined label datasets.

11. The method according to any of the preceding claims, further comprising:
receiving a second user input;
determining at least a part of the received sensor data to be output based on the second user input;
determining one or more output objects of the classified one or more objects based on the determined output sensor data;
wherein outputting the label comprises outputting the label automatically determined for the output one or more objects together with the output sensor data.

12. A computer-implemented method comprising:
receiving sensor data;
processing the sensor data to identify a plurality of objects located within at least a portion of map data;
determining a display label of each identified object based on a structured set of symbols;
determining one or more clusters of identified objects;
determining a display label of the or each object cluster based on the structured set of symbols;
providing a display space for displaying at least a portion of map data and the determined display label or labels, wherein the display space is displayable at one of a plurality of levels of zoom with display labels for identified objects output at a first level of zoom and display labels of object clusters output at a second level of zoom; and
receiving a user input zoom command to modify the displayed portion of the map, wherein the output of display labels of objects within the displayed portion of the map is modified in response to the user input zoom command.

13. A data processing apparatus comprising means for carrying out the method of any of the preceding claims.

14. A computer program product comprising instructions which, when the program is executed by a computer, cause the computer to carry out the method of any of claims 1 to 12.

15. A computer-readable storage medium comprising instructions which, when executed by a computer, cause the computer to carry out the method of any of claims 1 to 12.
